# EUROPEAN PATENT APPLICATION

(11) **EP 4 744 881 A1**
(43) Date of publication of application: **20.05.2026**
(21) Application number: 24213481.5
(22) Date of filing: 18.11.2024
(51) Int. Cl.: B32B 3/26, B32B 5/02, B32B 7/12, B32B 27/12, B32B 27/30, B32B 27/32

(54) **A PANEL AND A METHOD TO PROVIDE A PANEL**

(71) Applicant: Paneltim NV, 8810 Lichtervelde (BE)
(72) Inventor: Devoldere, Tom, 8500 Kortrijk (BE)
(74) Representative: Ipsilon Belgium

(57) **Abstract**

A panel comprises
- a hollow body comprising at least a first molded, preferably injection molded outer layer, said first injection molded outer layer having at least a first surface providing the first surface of the first injection molded outer layer, said molded, preferably injection molded outer layer being provided from a first polymer material with a first melting temperature Tm1;
- a first thermoplastic glue layer adhering to said first surface of the first injection molded outer layer, and wherein Tm2<Tm1 ;
- a first textile layer, said first textile layer adhering to said first thermoplastic glue layer, said first textile layer may either have no melting temperature, or may have a temperature Tm3, wherein Tm1<Tm3.

## Description

### Field of the Invention

The present invention generally relates to panels, such as floor panels, roof panels, partition panels or wall panels, in particularly panels comprising a hollow body, and to methods for providing such panels.

### Background of the Invention

panels comprising a hollow body are known in the art. As a mere example WO2018011393 described such panels.

In order to provide a more complex panel, such as one with internal hollow voids, as shown in WO2018011393, the panel is made from two halves, which are connected to each other. these two halves, in order to make them stiff but lightweight, comprise protrusions at one side, which are connected to the production of the other halve, thereby providing a panel with a hollow body, and reinforcing internal ribs or walls. These two halves are to be injection molded, in order to make the complex 3D structure.

Such panels with injection molded, complex bodies, have several disadvantages.

Injection molded surfaces have the tendency to be irregular, having a coarse outer surface. As an example the outer surfaces may show pitting and flow lines, but may as well show sink marks due to the different volume of polymer shrunk during cooling at the position of the ribs.

Often a covering is wanted to cover up the defects, but these irregularities make adhesion to the outer surfaces not feasible. As an example, adhering a layer to the outer surface, will cause the layer not to adhere at the sink marks or pitting valleys, causing defects in the adhesion of the and resulting in poor lifetime of the final product.

Panels with outer surfaces from polymeric material in general have the disadvantage that other materials tend to adhere quite difficultly to the outer surfaces. This in particular when the outer surfaces are made from polyolefin polymers, like polypropylene.

One way to adhere an outer layer to the injection molded hollow body, could be melting the outer surface of the hollow body, and pressing an outer layer to this molten polymer.

However melting the outer layer also cause the inner polymer to weaken to some extent. Exercising a pressure to the outer surfaces to adhere a layer to the outer surface, tends to modify the overall structure and properties of the panel. Possibly the final thickness of the panel is reduced. As in the internal hollow body, the walls are compressed in weak state, the walls may bulge while being heated, and the air or gas inside the volumes may expand during heating. During cooling, the internal walls become stressed due to the reduction of volume of the air entrapped, which make the panel less strong.

Being confronted with this given, attempts to make panel which can be finished by conventional stucco or cement or alike by adhering a textile outer layer, is problematic. The fibers of the textile layer may give sufficient 'grip' to the stucco or cement, but providing the textile layer to the outer injection molded surface of the hollow body, was not feasible.

### Summary of the Invention

It is the aim of the present invention to provide a panel which can be made with a flat outer surface and enabling materials, such as glue, stucco or cement, to adhere to the outer surface. The panel may be used as wall panel, floor panel, a partition panel and/or roof panel in constructions and alike.

According to the first aspect of the invention a method to provide a panel is provided. The method comprises
- providing a hollow body comprising at least a molded outer layer, most preferably an injection molded outer layer, said first molded, preferably injection molded, layer having at least a first surface providing the outer surface of the first outer layer, said molded, preferably injection molded, outer layer being provided from a first polymer material with a first melting temperature Tm1;
- providing a first thermoplastic glue layer having a second melting temperature Tm2, and wherein Tm2<Tm1,
- providing first textile layer, said first textile layer said first textile layer may either have no melting temperature, or may have a melting temperature Tm3, wherein Tm1<Tm3,
- heating the first, hence outer surface of the first molded, preferably injection molded, molded, preferably injection molded, layer to a temperature above its melting temperature Tm1;
- stacking the first thermoplastic glue layer on the first, hence outer surface of the first molded, preferably injection molded, molded, preferably injection molded, layer and heating the first thermoplastic glue layer to above its melting temperature Tm2;
- stacking the first textile layer on the first thermoplastic glue layer;
- compacting the stacked the first molded, preferably injection molded, layer, first thermoplastic glue layer and first textile layer.

By this compacting step, the first surface, being the outer surface of the first molded, preferably injection molded, layer, the first thermoplastic glue layer and the first textile layer will adhere one to the other.

Thus, the first textile layer and the first thermoplastic glue layer are provided from material having a melting temperature, Tm2<Tm1<Tm3.

By taking the steps according to the methods of the invention, the softened but not melted first outer surface of the first molded, preferably injection molded outer layer may adhere to the molten first thermoplastic glue layer intimately, while the temperature of the first molded, preferably injection molded outer layer is not too high to cause significant damage to the complete hollow body during compression in the compacting step. On the other hand, the molten first thermoplastic glue layer may penetrate into the textile layer sufficiently deep to establish a good bond, while the fibers of the textile layer are not melting away.

As such the panel resulting from the method may be provided with a smooth and flat outer textile layer, allowing other materials, such as, but not limited to, glue, stucco or cement, to adhere to the textile layer, while the bond between textile layer and outer of the hollow body is fully and adequately provided by the thermoplastic glue layer.

When reference is made to melting points and melting temperature, the melting point and melting temperature at ambient pressure is to be understood.

Melting temperatures, hereinafter referred to as Tm, is to be understood as the peak melting temperature of the material.

The polymer of the first molded, preferably injection molded, outer layer preferably may be polypropylene (PP), polyethylene (PE) or polyvinyl chloride (PVC), or combination thereof.

The first textile layer may be a textile layer of material having no melting temperature, like textile layers from natural fibers, such as cotton, flax, hemp, sisal, wool, and alike.

The first textile layer may be a textile layer of polymeric material. The polymer of this textile layer may comprise or even consist of fibers made out of polyesters (PES), like polyethylene terephthalate (PET), polyamides (PA) and alike.

The polymer of the first thermoplastic glue layer preferably are polyolefin-based glue layers.

The layer preferably may be provided as a film or foil, a web or a net.

According to some embodiments, the compacting step may be a calendaring step.

According to some embodiments, the temperature of the first outer surface of the first molded, preferably injection molded, outer layer may be brought above the heat deflection temperature of the first polymer material.

According to some embodiments, the step of heating the first outer surface of the first molded, preferably injection molded, outer layer to a temperature above its melting temperature Tm1 may comprise a first heating step wherein the temperature of at least the first outer surface of the first molded, preferably injection molded outer layer is heated to a temperature under or equal to its melting temperature Tm1, and a second heating step wherein the temperature of at least the first outer surface of the first outer layer is heated to above its melting temperature Tm1.

This first heating step, also referred to as preheating, may be done by using IR radiation. Preferably in this first heating step, the temperature of the first outer surface of the first molded, preferably injection molded outer layer is heated to a temperature under its melting temperature Tm1. Possibly the whole first molded, preferably injection molded outer layer is heated to a temperature under its melting temperature Tm1. In the second heating step, only the first outer surface of the first molded, preferably injection molded outer layer is heated to above its melting temperature Tm1.

According to some embodiments, the maximum thickness of the first thermoplastic glue layer may be less than or equal to, and preferably less than, the height difference between the lowest and highest point of the first outer surface of the first molded, preferably injection molded outer layer.

Preferably the thickness of the first thermoplastic glue layer is at least 0.02mm, and may be less than or equal to 0.2mm, such as in the range of 0.04mm to 0.15mm, e.g. 0.05mm to 0.1mm.

The provision of melting the first outer surface of the first molded, preferably injection molded outer layer, and using a further glue layer which is melted to its melting temperature Tm2, the latter being lower than the melting temperature of the material of the first outer surface of the first molded, preferably injection molded outer layer, after which a textile layer is adhered to these molten surfaces, surprisingly results in the provision of a smooth and flat panel. This while melting only the first outer surface of the first molded, preferably injection molded outer layer and adhering a textile product directly to this molten surface, results in a product with less good all over adhesion. Although not willing to be bound by any theory, it is believed that the molten glue is at least partially used to flow to and at least partially fill the deeper cavities because of amongst others sink marks, providing adhesion to the textile layer at these spots. Adjacent to these spots, the textile layer may adhere to either the remaining molten glue layer, or the molten material of the first outer surface of the first molded, preferably injection molded outer layer.

According to some embodiments, the minimum thickness of the first textile layer may be more than the maximum thickness of the first thermoplastic glue layer

This has the effect that the risk of the molten glue layer penetrating through the entire thickness of the textile layer is reduced, even avoided, leaving free textile surface over the entire outer side of the panel.

According to some embodiments, the first textile layer may be a nonwoven textile layer.

Alternatively the first textile layer is a nonwoven textile layer may be a woven, knitted, either warp knitted or weft knitted, or braided textile layer.

The nonwoven may comprise reinforcing scrim or woven fabric to which fibers are needle punched.

According to some embodiments, the first textile layer may have a density in the range of 2 % to 25%.

More preferred, the density of the first textile layer is in the range of 5 % to 15%, e.g. in the range of 8% to 12%.

The hollow body comprises at least one molded, preferably injection molded outer layer and may further comprise one or a plurality of projections extending inwards said hollow body from a second surface providing the inner surface of the first molded, preferably injection molded outer layer.

The hollow body may comprise at least the first and a second molded, preferably injection molded outer layer. Each of the two molded, preferably injection molded outer layers provide an outer surface of the hollow body and an inner surface oriented inwards the hollow body. The hollow body may further comprise one or a plurality of projections present in said hollow body and contacting the two second surface. These projections may provide reinforcing walls inside the hollow body and may even provide a honeycomb like structure inside the hollow body. In the context of this invention, a honeycomb like structure is to be understood as a structure comprising walls, together defining prism-shaped cells, with a polygonal base, such as a triangular, square, rectangular, parallelogram or trapezoid, heptagonal or hexagonal base.

The hollow body may be provided as one integral injection molded volume, but preferably is provided from two parts, which parts are adhered one to the other to form the hollow body. The two parts may be separated by a plane substantially parallel to one or both the outer layers. As a preferred embodiment, the hollow body is provided from two parts, each of the parts comprising a molded, preferably injection molded outer layer and one or a plurality of projections extending from a surface intended to provide the inner surface of the first molded, preferably injection molded outer layer in the hollow body. These two parts, which may be similar, mutually mirrored or identical parts, may be connected to each other by connecting the tops of the projections to either the inner surface of the other part, or the tips of the projections of the other part.

According to some embodiments, the hollow body may comprise at least a second molded, preferably injection molded outer layer opposite to and parallel with the first molded, preferably injection molded outer layer, said second injection molded outer layer having at least a first outer surface providing the outer surface of the second molded, preferably injection molded outer layer. These first and second molded, preferably injection molded outer layers may be provided from said first polymer material with a first melting temperature Tm1. However, in any case, the second molded, preferably injection molded outer layers is provided from a second polymer material with a further melting temperature Tm6, The method may comprise the steps of
- providing a second thermoplastic glue layer having the fourth melting temperature Tm4, said second thermoplastic glue layer contacting the first outer surface of the second molded, preferably injection molded outer layer, and wherein Tm4<Tm6,
- providing a second textile layer, this second textile layer may either have no melting temperature, or may have a fifth melting temperature Tm5, wherein Tm6<Tm5,
- heating the first outer surface of the second molded, preferably injection molded outer layer to a temperature above its melting temperature Tm6;
- stacking the second thermoplastic glue layer on the first outer surface of the second molded, preferably injection molded outer layer and heating the second thermoplastic glue layer to above its melting temperature Tm4;
- stacking the second textile layer on the second thermoplastic glue layer;
- compacting the stacked second molded, preferably injection molded outer layer, second thermoplastic glue layer and second textile layer, optionally simultaneously with said compacting of the stacked first molded, preferably
injection molded outer layer, first thermoplastic glue layer and first textile layer.

In case these first and second molded, preferably injection molded outer layers are provided from said first polymer material with a first melting temperature Tm1, the method comprises
- providing a second thermoplastic glue layer having the fourth melting temperature Tm4, said first thermoplastic glue layer contacting the first outer surface of the second molded, preferably injection molded outer layer, and wherein Tm4<Tm1,
- providing a second textile layer, this second textile layer may either have no melting temperature, or may have a fifth melting temperature Tm5, wherein Tm1<Tm5,
- heating the first outer surface of the second molded, preferably injection molded outer layer to a temperature above its melting temperature Tm1;
- stacking the second thermoplastic glue layer on the first outer surface of the second molded, preferably injection molded outer layer and heating the second thermoplastic glue layer to above its melting temperature Tm4;
- stacking the second textile layer on the second thermoplastic glue layer;
- compacting the stacked second molded, preferably injection molded outer layer, second thermoplastic glue layer and second textile layer.

Also for these heating steps, the heating may be done in several steps, using a pre-heating step before a final heating step.

According to some embodiments, the step of compacting the stacked second molded, preferably injection molded outer layer, second thermoplastic glue layer and second textile layer may be done simultaneously with the compacting of the stacked first molded, preferably injection molded outer layer, first thermoplastic glue layer and first textile layer. Alternatively, first the compacting of the stacked first molded, preferably injection molded outer layer, first thermoplastic glue layer and first textile layer is performed, after which the steps of heating, contacting and compacting the layers on the second molded, preferably injection molded outer layer are preformed.

It is understood that the heating of the first outer surface of the second molded, preferably injection molded outer layer, the stacking the second thermoplastic glue layer on the first outer surface of the second molded, preferably injection molded outer layer and heating the second thermoplastic glue layer and the stacking the second textile layer on the second thermoplastic glue layer may be done after the heating of the first outer surface of the first molded, preferably injection molded outer layer, the stacking the first thermoplastic glue layer on the first outer surface of the first molded, preferably injection molded outer layer and heating the first thermoplastic glue layer and the stacking the first textile layer on the first thermoplastic glue layer.

Alternatively, some of these steps may be done simultaneously. As an example, the heating of the first outer surface of the second molded, preferably injection molded outer layer, may be done simultaneously with heating of the first outer surface of the first molded, preferably injection molded outer layer. Possibly the stacking of the first thermoplastic glue layer on the first outer surface of the first molded, preferably injection molded outer layer may be done after or simultaneously with the stacking the second thermoplastic glue layer on the first outer surface of the second molded, preferably injection molded outer layer. Further, heating the first thermoplastic glue layer may be done after or simultaneously with heating the second thermoplastic glue layer. Also stacking the second textile layer on the second thermoplastic glue layer may be done after or simultaneously with stacking the first textile layer on the first thermoplastic glue layer.

According to some embodiments, the first and the second thermoplastic glue layers may be identical. According to some embodiments, the first and the second thermoplastic textile layers may be identical. According to some embodiments, the first and the second thermoplastic glue layers may be identical, and the first and the second thermoplastic textile layers may be identical.

As such a panel may be provided having at both its outer surface a flat and well connected textile layer.

The first and second textile layer may be of similar or identical material, optionally are even identical one to the other. Hence possibly Tm3 is equal to Tm5.

The first and second glue layer may be of similar or identical material, optionally are even identical one to the other. Hence possibly Tm2 is equal to Tm4.

The two molded, preferably injection molded outer layers are part of one hollow body, and may be similar or even identical one to the other. each of the two molded, preferably injection molded outer layers may be part of a separately injection molded element, which two injection molded elements may be combined into an injection molded hollow body. Also in case the outer surface of the second injection molded outer layer is not provided with a glue layer and a textile layer, two injection molded element may be provided, which two injection molded elements may be combined into the injection molded hollow body.

The panel according to the first aspect of the invention may be used as wall panel, floor panel, a partition panel and/or roof panel in constructions and alike.

According to a second aspect of the invention a panel is provided. The panel comprises:
- a hollow body comprising at least a first molded, preferably injection molded outer layer, said first molded, preferably injection molded outer layer having at least a first surface providing the first surface of the first molded, preferably injection molded outer layer, said molded, preferably injection molded outer layer being provided from a first polymer material with a first melting temperature Tm1;
- a first thermoplastic glue layer adhering to said first surface of the first molded, preferably injection molded outer layer, and wherein Tm2<Tm1;
- a first textile layer, said first textile layer adhering to said first thermoplastic glue layer, said first textile layer may either have no melting temperature, or may have a melting temperature Tm3, wherein Tm1<Tm3.

Optionally, according to some embodiments, the hollow body may be provided from two parts, which parts are adhered one to the other to form the hollow body, each of the parts comprises a molded, preferably injection molded outer layer and one or a plurality of projections extending from a surface intended to provide the inner surface of the first molded, preferably injection molded outer layer in the hollow body.

Possibly, the hollow body may comprise a second molded, preferably injection molded outer layer, said second molded, preferably injection molded outer layer having at least a first surface providing the first surface of the second molded, preferably injection molded outer layer. The panel may comprise a second thermoplastic glue layer adhering to the first surface of the second molded, preferably injection molded outer layer, and having melting temperature Tm4 being less than the melting temperature of the first surface of the second molded, preferably injection molded outer layer, and a second textile layer adhering to the second thermoplastic glue layer, which second textile layer may either have no melting temperature, or may have a melting temperature Tm5, for which Tm5 is higher than the melting temperature of the first surface of the second molded, preferably injection molded outer layer.

According to some embodiments, the hollow body comprises a second molded, preferably injection molded outer layer, said second molded, preferably injection molded outer layer having at least a first surface providing the first surface of the second molded, preferably injection molded outer layer, said second molded, preferably injection molded outer layer being provided from a second polymer material with a melting temperature Tm6. The panel comprises a second thermoplastic glue layer adhering to the first surface of the second molded, preferably injection molded outer layer, and having melting temperature Tm4 being less than the melting temperature of the first surface of the second molded, preferably injection molded outer layer Tm6, and a second textile layer adhering to the second thermoplastic glue layer, which second textile layer may either have no melting temperature, or may have a temperature Tm5, for which Tm5 is higher than the melting temperature of the first surface of the second molded, preferably injection molded outer layer Tm6.

According to some embodiments, the first and second polymer material may be similar or identical, hence Tm1 equaling Tm6. According to some embodiments the first and the second thermoplastic glue layers may be similar or even identical. According to some embodiments, the first and the second thermoplastic textile layers may be similar, even identical.

According to some embodiments, the first and second polymer material may be similar or even identical, hence Tm1 equaling Tm6 and the first and the second thermoplastic glue layers may be similar or identical, and the first and the second thermoplastic textile layers being similar or identical.

As such a panel has at one or even at both its outer surface a flat and well connected textile layer. Thus a textile coated panel, with a textile coating on one or on both sides is provided.

The first and second textile layer may be of similar or identical material, optionally are even identical one to the other. Hence possibly Tm3 is equal to Tm5.

The first and second glue layer may be of similar or identical material, optionally are even identical one to the other. Hence possibly Tm2 is equal to Tm4.

The two molded, preferably injection molded outer layers are part of one hollow body, and may be similar or even identical one to the other. Possibly the two molded, preferably injection molded outer layers are made of the same polymer, hence for both molded, preferably injection molded outer layers the melting temperature is Tm1. In the case the two molded, preferably injection molded outer layers are not provided from the same polymer, the melting temperature of the first molded, preferably injection molded outer layer is Tm1, the melting temperature of the first molded, preferably injection molded outer layer being a sixth meting temperature Tm6. In this case Tm4<Tm6 and in case the second textile layer has a melting temperature Tm5, Tm6<Tm5

Possibly, the hollow body may comprise a second molded, preferably injection molded outer layer, said second molded, preferably injection molded outer layer having at least a first surface providing the first surface of the second molded, preferably injection molded outer layer. The panel may comprise a second thermoplastic glue layer adhering to the first surface of the second molded, preferably injection molded outer layer, and having melting temperature Tm4 being less than the melting temperature of the first surface of the second molded, preferably injection molded outer layer, and a second textile layer adhering to the second thermoplastic glue layer, which second textile layer may either have no melting temperature, or may have a temperature Tm5, for which Tm5 is higher than the melting temperature of the first surface of the second molded, preferably injection molded outer layer.

The panel according to the second aspect of the invention may be used as wall panel, floor panel, a partition panel and/or roof panel in constructions and alike. The panel according to the second aspect of the invention may be provided using the method according to the first aspect of the invention.

According to some embodiments, the first molded, preferably injection molded outer layer may have a second surface providing the inner surface of the first molded, preferably injection molded outer layer, said first molded, preferably injection molded outer layer comprises one or a plurality of projections extending inwards said hollow body .

According to some embodiments, the hollow body may be provided from two parts, which parts are adhered one to the other to form the hollow body.

According to some embodiments, each of the parts may comprise a molded, preferably injection molded outer layer and one or a plurality of projections extending from a surface intended to provide the inner surface of the first molded, preferably injection molded outer layer in the hollow body.

According to some embodiments, the two parts may be connected to each other by connecting the tops of the projections to either the inner surface of the other part, or the tips of the projections of the other part.

According to a third aspect of the invention, a panel according to the second aspect of the invention, or a panel obtainable, even obtained by a method according to the first aspect of the invention, is used as a wall panel, a roof panel, a partition panel and/or a floor panel.

The wall, floor or roof, or the partition may be part of a building, such as an office, work- or production hall, a house or garage, a stable such as a stable in a livestock farm, such as a pigsty, sheepsty, goatsty, cattle stable, chicken run, rabbit run, run for birds or small livestock, storage space, silo, and alike. It is understood that features of one aspect of the invention may be combined with any or all features of any or all other aspects of the invention. And it is understood that when reference is made to ranges in the context of this invention, these ranges are to be understood inclusive, except when explicitly stated differently.

### Brief Description of the Drawings

Fig. 1 illustrates schematically the layers which together will provide a panel according to the second aspect of the invention, prior to executing a method according to the first aspect of the invention.
Fig. 2 illustrates schematically a panel according to the second aspect of the invention, after executing a method according to the first aspect of the invention.
Fig. 3 and Fig. 4 illustrate schematically the layers which together will provide another panel according to the second aspect of the invention, prior to executing a method according to the first aspect of the invention.
Fig. 5 illustrates schematically this other panel according to the second aspect of the invention, again after executing a method according to the first aspect of the invention.

In the different figures, in the same reference signs refer to the same or a similar feature.

### Detailed Description of Embodiment(s)

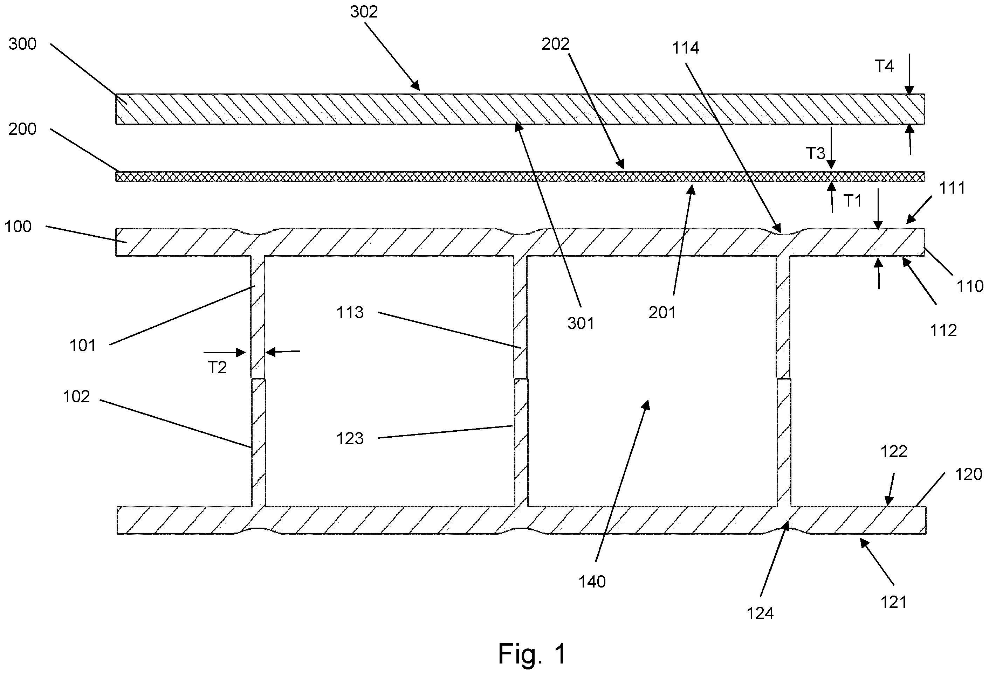

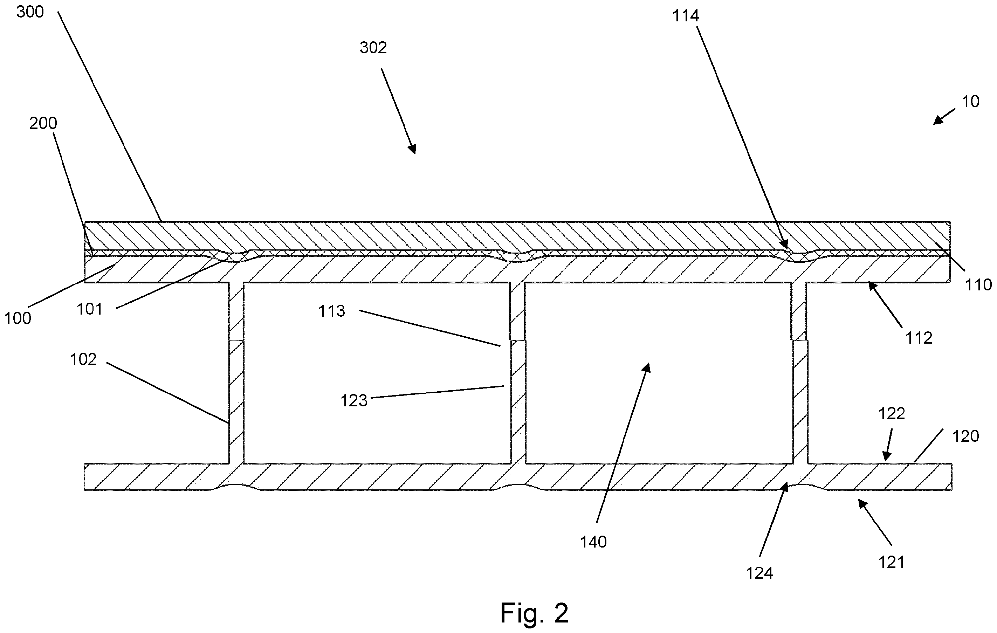

In figure 1, the basic elements used in a first embodiment of a method to provide a panel according to the invention, are shown. These basic elements are converted into the panel 10 as shown in figure 2. It is noticed that the figures are not drawn on scale for clarification purposes only.

As best visible in figure 1, a hollow body 100 is shown, which is provided from two injection molded elements 101 and 102. Both injection molded elements provide an injection molded outer layer 110 respectively 120. Both injection molded outer layers 110 and 120 provide a first surface 111 respectively 121 which in both cases in the outer side of the respective injection molded outer layer. Both injection molded outer layers 110 and 120 also provide a second surface 112 respectively 122 which in both cases is the inner side of the respective injection molded outer layer. At the inner surfaces 112 and 122, at regular intervals, inwards projecting ribs 113 and 123 are provided. The outer ends of these ribs 113 and 123 are connected one to the other, by melt adhesion, such as using mirror welding. As such a hollow body 100 is provided having internal cavities 140.

Due to the injection molding process, and in particularly when strong, firm ribs 113 and 123 are to be provided to the hollow body, sink marks 114 and 124 may be noticed on the outer sides 111 and 121 of the respective injection molded outer layers 110 and 120.

In this embodiment shown in figures 1 and 2, a first thermoplastic glue layer 200 is provided at the side of the first, hence outer surface 111 of the first injection molded outer layer 110. The side 201 of thermoplastic glue layer 200, is oriented towards the hollow body 100.

Further, a first textile layer 300 is provided at the side 202 of thermoplastic glue layer 200, which side 202 is oriented away from the hollow body 100. The side 301 of textile layer 300 is oriented towards the thermoplastic glue layer 200, whereas the side 302 of textile layer 300 is oriented away from the thermoplastic glue layer 200, and is to provide the outer surface of the panel 10.

During the execution of the method according to the invention, as an example, the first surface 111 of the injection molded outer layer 110 is brought to a temperature above the melting temperature Tm1. This may be done in two stages, where first the hollow body in its entirety is heated to a temperature lower than its melting temperature, during a so called pre-heating step. However only pre-heating the first surface 111 of the injection molded outer layer 110 is preferred. For this, IR radiation heat may be used. In the next step, the first surface 111 of the injection molded outer layer 110 is further heated to above the melting temperature Tm1.

The first thermoplastic glue layer 200, optionally pre-heated to less than its melting temperature Tm2, is brought in contact with the first surface 111 of the injection molded outer layer 110 and is further heated to above its melting temperature Tm2,while also the first surface 111 of the injection molded outer layer 110 is further heated to above the melting temperature Tm1. As such two molten layers are in contact with each other. The first textile layer 300 is now provided at the side 202 of thermoplastic glue layer 200, and the hollow body, the molten first thermoplastic glue layer 200 and the textile layer 300 which has a melting temperature Tm3 above the temperature of the first surface, are calendared to each other, thereby enabling the two molten layers to evenly spread, and to penetrate at least partially in the textile layer 300. The complete stack is now cooled and the molten layers are solidified again, thereby providing a firm bond between the hollow body 100, the molten first thermoplastic glue layer 200 and the textile layer 300. As such the panel 10 shown in figure 2 is provided.

As a mere example, the two injection molded elements 101 and 102 may be provided from polypropylene (PP), with a melting temperature Tm1 of about 160°C. The thickness T1 of the injection molded outer layers 110 and 120 are both in the range of 3mm to 8mm. The thickness T2 of the ribs at the inner side of the injection molded outer layers 110 and 120 are both in the range of 1.5mm to6mm . The maximum height difference measurable over the outer surface 111, respectively 121, i.e. between the highest point on the outer surface 111, respectively 121 and the lowest point of the outer surface 111, respectively 121, is about 0.7mm.

It is understood that alternatively, the two injection molded elements 101 and 102 may be provided from another polymer material adapted for injection molding, like polyethylene. According to a further alternative, the two injection molded elements 101 and 102 may be provided from two different but mutually weldable polymer material, in which case the melting temperature Tm1 of the polymer material of the first injection molded element 101, hence of the injection molded outer layer 110 may differ from the melting temperature Tm6 of the polymer material of the second injection molded element 102, hence of the injection molded outer layer 120.

The thermoplastic glue layer 200 has a thickness T3 of about 0.05mm to 0.1mm, with a weight of about 40 g/m² and provided e.g. as a net, web, slit film or film. The polymer is a polyolefin polymer and has a melting temperature of Tm2 well below the PP, at about 130°C to 140°C.

The textile layer 300 is polyester (PES) nonwoven fabric (average thickness about 0.85mm) with a thickness T4 of 0.6mm to 1.0mm and having a weight of 100 gram per square meter. The melting temperature of the PES is about 260°C

In the pre-heating step, the first surface 111 of the injection molded outer layer 110 is heated, using IR radiation, to a temperature of about 80°C to 110°C. The first thermoplastic glue layer 200, is brought in contact with the first surface 111 of the injection molded outer layer 110 and is further heated to above its melting temperature Tm2, as an example to about 180°C. As such two molten layers are in contact with each other. This heating may also be done by IR radiation. The first textile layer 300 is now provided at the side 202 of thermoplastic glue layer 200, and the hollow body, the molten first thermoplastic glue layer 200 and the textile layer 300 are calendared to each other using a calendar at a temperature of about 200°C to 240°C and a pressure in the range of 10 to 20 N/cm².

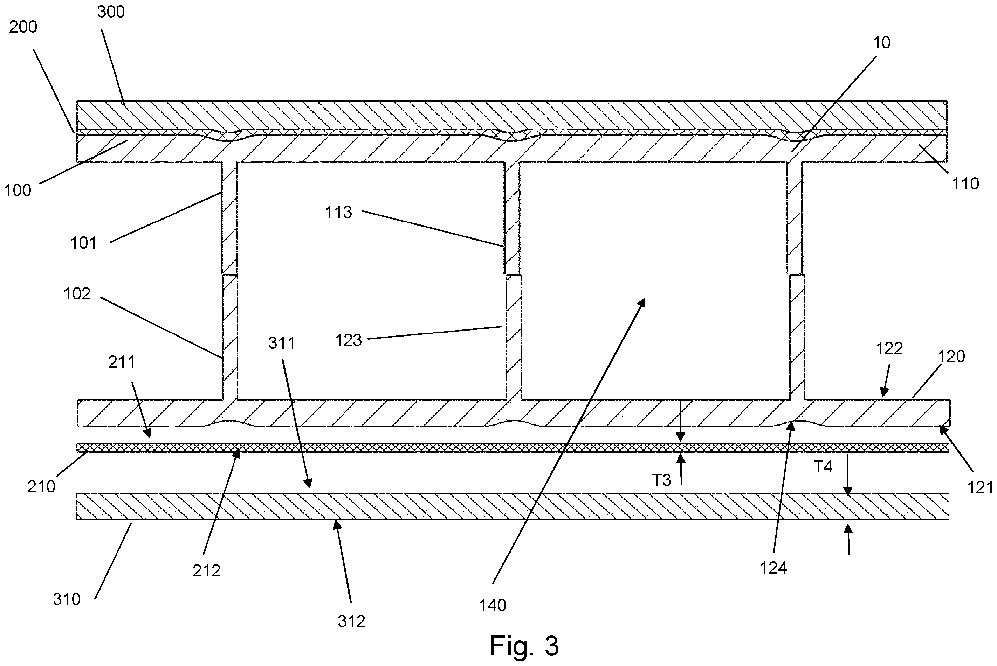

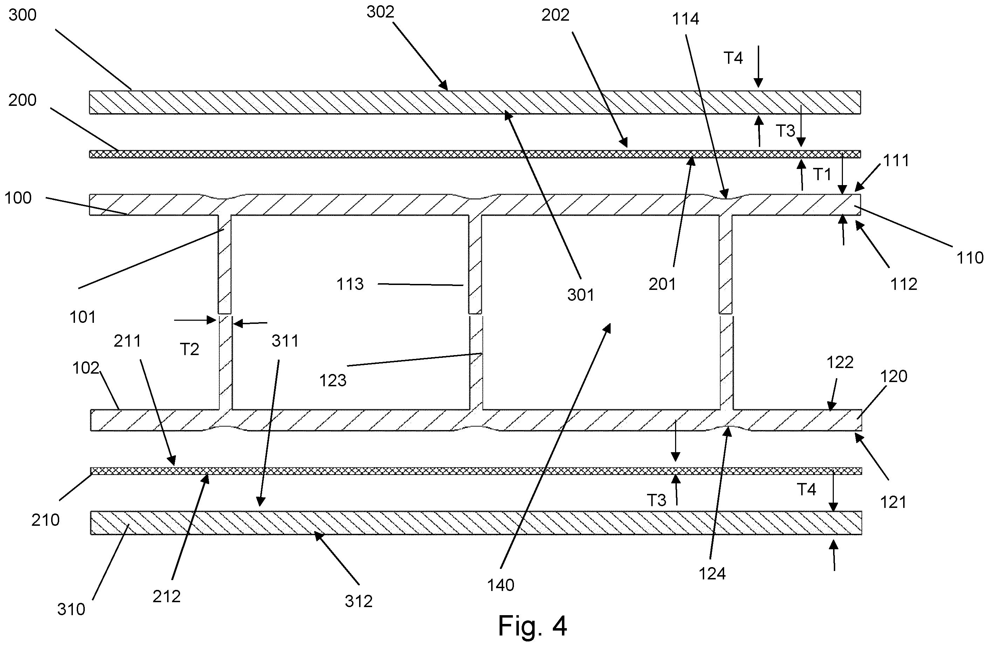

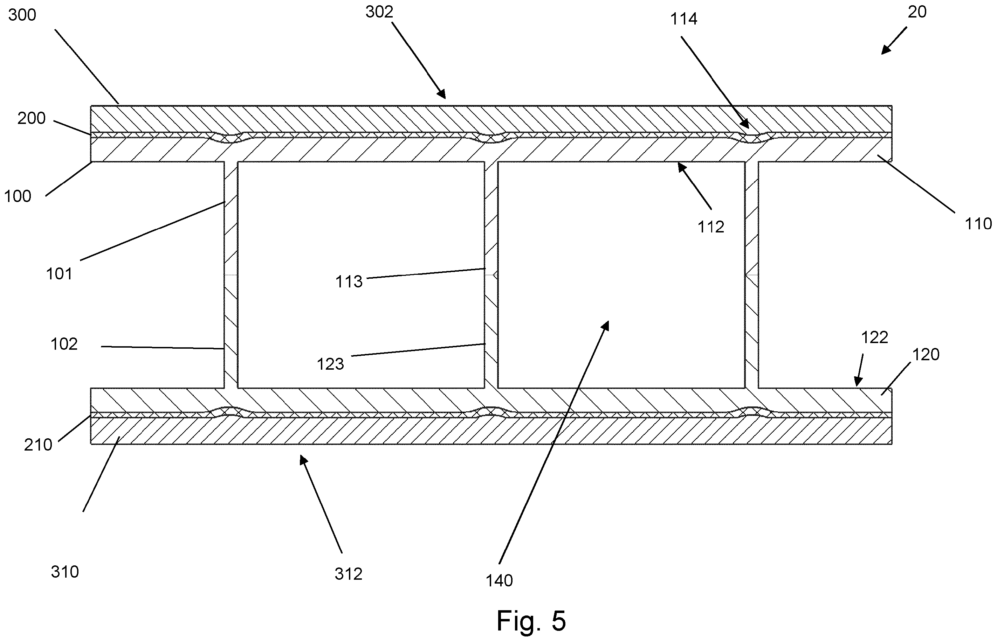

Another panel 20 having at both sides a textile layer, as shown in figure 5, can be provided using the steps as will be set out using figure 3 or figure 4. In figure 3, the panel 10 of figure 2 is used as intermediate panel. In an identical or similar way, a second thermoplastic glue layer 210 is provided at the side of the first, hence outer surface 121 of the second injection molded outer layer 120. The side 211 of thermoplastic glue layer 210, is oriented towards the hollow body 100.

Further, a second textile layer 310 is provided at the side 212 of thermoplastic glue layer 210, which side 212 is oriented away from the hollow body 100. The side 311 of textile layer 310 is oriented towards the thermoplastic glue layer 210, whereas the side 312 of textile layer 310 is oriented away from the thermoplastic glue layer 210, and is to provide the outer surface of the panel 20.

After having provided panel 10, in an entirely similar, even identical way, the second glue layer 210 and the second textile layer 310 is brough in adhesion to the first, hence outer surface 121 of the second injection molded outer layer 120.

As was set out in relation to figure 1 and 2, the outer surface 121 of the second injection molded outer layer 120 is first pre-heated to a temperature lower than its melting temperature, in this case Tm6, which is identical to Tm1.

The second thermoplastic glue layer 210, optionally pre-heated to less than its melting temperature Tm4, is brought in contact with the first surface 121 of the injection molded outer layer 120 and is further heated to above its melting temperature Tm4,while also the first surface 121 of the injection molded outer layer 120 is further heated to above the melting temperature Tm4. In the preferred embodiment, Tm1 equals Tm6 and Tm2 equals Tm4. As such two molten layers are in contact with each other. The second textile layer 310 is now provided at the side 212 of thermoplastic glue layer 210, and the hollow body, the molten thermoplastic glue layer 210 and the textile layer 310 which has a melting temperature Tm5 above the temperature of the first surface 121, are calendared to each other, thereby enabling the two molten layers to evenly spread, and to penetrate at least partially in the textile layer 310. The complete stack is again cooled and the molten layers are solidified again, thereby providing a firm bond between the hollow body 100, the molten second thermoplastic glue layer 210 and the textile layer 310. Since no modifications were provided to the opposite side of the panel 10, the already existing firm bond between the hollow body 100, the molten first thermoplastic glue layer 200 and the textile layer 300 remains. As such the panel 20 shown in figure 5 is provided.

The two glue layers 200 and 210, the two textile layers 300 and 310 and the two elements of the hollow body 100 may all be identical one to the other. The process settings of temperature, pressure, heating means, calendering means and alike for the adhesion of the hollow body 100, the molten second thermoplastic glue layer 210 and the textile layer 310 may be identical to the settings used as described above for the provision on the adhesion of the hollow body 100, the molten first thermoplastic glue layer 200 and the textile layer 300.

As is shown in figure 4, the two thermoplastic glue layers 200 and 210, and the two textile layers 300 and 310 may also be converted into a panel 20 according to the invention in one run. The hollow body 100, the two thermoplastic glue layers 200 and 210, and the two textile layers 300 and 310 are all provided. The two injection molded outer layers 110 and 120 are first pre-heated to a temperature lower than their melting temperatures, which preferably are identical.

The first and second thermoplastic glue layers 200 and 210, optionally pre-heated to less than its melting temperatures, are brought in contact with the first surface 111 respectively 121 of the injection molded outer layer 110 respectively 120 and are further heated to above their melting temperatures, which preferably are identical. This while also the first surfaces 111 and 121 of the injection molded outer layers 110 and 120 ae further heated to above the melting temperatures, which preferably are identical. As such two sets of two molten layers are in contact with each other. The first and second textile layers 300 and 310 are now provided at the sides 202 and 212 of thermoplastic glue layer 200 respectively 210. The hollow body, the molten thermoplastic glue layers 200 and 210 and the textile layers 300and 31, are calendared to each other, thereby enabling the two sets of two molten layers to evenly spread, and to penetrate at least partially in the textile layers 300 and 310. The complete stack is again cooled and the molten layers are solidified again, thereby providing a firm bond between the hollow body 100, the molten first thermoplastic glue layer 200 and the textile layer 300 and the molten second thermoplastic glue layer 210 and the textile layer 310. As such also a panel 20 as shown in figure 5 is provided.

Also here it is understood that the two glue layers 200 and 210, the two textile layers 300 and 310 and the two elements of the hollow body 100 may all be identical one to the other. The process settings of temperature, pressure, heating means, calendering means and alike for the adhesion of the hollow body 100, the molten thermoplastic glue layers 200 and 210 and the textile layers 300 and 310 may be identical to the settings used as described above in view of embodiment according to figure 1 and figure 3.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

**1.** A method to provide a panel comprising
- Providing a hollow body comprising at least a first injection molded outer layer, said first injection molded outer layer having at least a first surface providing the outer surface of the first injection molded outer layer, said injection molded outer layer being provided from a first polymer material with a first melting temperature Tm1;
- Providing a first thermoplastic glue layer having a second melting temperature Tm2, wherein Tm2<Tm1,
- providing first textile layer, said first textile layer, said first textile layer may either have no melting temperature, or may have a melting temperature Tm3, wherein Tm1<Tm3,
- heating the first surface of the first injection molded outer layer to a temperature above its melting temperature Tm1;
- stacking the first thermoplastic glue layer on the first surface of the first injection molded outer layer and heating the first thermoplastic glue layer to above its melting temperature Tm2;
- stacking the first textile layer on the first thermoplastic glue layer;
- compacting the stacked first injection molded outer layer, first thermoplastic glue layer and first textile layer.

**2.** A method to provide a panel according to claim 1, wherein said compacting step is a calendaring step.

**3.** A method to provide a panel according to any one of the preceding claims, wherein the temperature of the first surface of the first injection molded outer layer is brought above the heat deflection temperature of the first polymer material.

**5.** A method to provide a panel according to any one of the preceding claims, wherein the minimum thickness of the first textile layer is more than the maximum thickness of the first thermoplastic glue layer

**6.** A method to provide a panel according to any one of the preceding claims, wherein the first textile layer is a nonwoven textile layer.

**7.** A method to provide a panel according to any one of the preceding claims, wherein the first textile layer has a density in the range of 2 % to 25%.

**8.** A method to provide a panel according to any one of the preceding claims, wherein the hollow body comprises at least a second injection molded outer layer opposite to and parallel with the first injection molded outer layer, said second injection molded outer layer having at least a first outer surface providing the outer surface of the second injection molded outer layer, said second injection molded outer layers being provided from a second polymer material with a further melting temperature Tm6, the method comprises:
- providing a second thermoplastic glue layer having the fourth melting temperature Tm4, said second thermoplastic glue layer contacting the first outer surface of the second injection molded outer layer, and wherein Tm4<Tm6,
- providing a second textile layer, this second textile layer may either have no melting temperature, or may have a fifth melting temperature Tm5, wherein Tm6<Tm5,
- heating the first outer surface of the second injection molded outer layer to a temperature above its melting temperature Tm6;
- stacking the second thermoplastic glue layer on the first outer surface of the second injection molded outer layer and heating the second thermoplastic glue layer to above its melting temperature Tm4;
- stacking the second textile layer on the second thermoplastic glue layer;
- compacting the stacked second injection molded outer layer, second thermoplastic glue layer and second textile layer.

**9.** A method to provide a panel according to claim 8, wherein the first and second polymer material are identical, Tm1 equaling Tm6.

**10.** A method to provide a panel according to any one of the claims 8 to 9, wherein said compacting the stacked the second injection molded outer layer, second thermoplastic glue layer and second textile layer is done simultaneously with said compacting of the stacked first injection molded outer layer, first thermoplastic glue layer and first textile layer.

**11.** A method to provide a panel according to any one of the claims 8 to 10, wherein the first and the second thermoplastic glue layers are identical and/or the first and the second thermoplastic textile layers are identical.

**12.** A panel comprising
- A hollow body comprising at least a first injection molded outer layer, said first injection molded outer layer having at least a first surface providing the first surface of the first injection molded outer layer, said first injection molded outer layer being provided from a first polymer material with a first melting temperature Tm1;
- first thermoplastic glue layer adhering to said first surface of the first injection molded outer layer, and wherein Tm2<Tm1;
- a first textile layer, said first textile layer adhering to said first thermoplastic glue layer, said first textile layer may either have no melting temperature, or may have a melting temperature Tm3, wherein Tm1<Tm3.

**13.** A panel according to claim 12, wherein the hollow body is provided from two parts, which parts are adhered one to the other to form the hollow body, each of the parts comprises an injection molded outer layer and one or a plurality of projections extending from a surface intended to provide the inner surface of the first injection molded outer layer in the hollow body.

**14.** A panel according to any one of the claims 12 to 13, wherein the hollow body comprises a second injection molded outer layer , said second injection molded outer layer having at least a first surface providing the first surface of the second injection molded outer layer, said second injection molded outer layer being provided from a second polymer material with a melting temperature Tm6, the panel comprises a second thermoplastic glue layer adhering to the first surface of the second injection molded outer layer, and having melting temperature Tm4 being less than the melting temperature of the first surface of the second injection molded outer layer Tm6, and a second textile layer adhering to the second thermoplastic glue layer, which second textile layer may either have no melting temperature, or may have a temperature Tm5, for which Tm5 is higher than the melting temperature of the first surface of the second injection molded outer layer Tm6.

**15.** A panel according to claim 14, wherein the first and second polymer material are identical, Tm1 equaling Tm6 and/or the first and the second thermoplastic glue layers are identical and/or the first and the second thermoplastic textile layers are identical.
